# EUROPÄISCHE PATENTANMELDUNG

(11) **EP 2 388 290 A1**
(43) Veröffentlichungstag der Anmeldung: **23.11.2011**
(21) Anmeldenummer: 10163185.1
(22) Anmeldetag: 18.05.2010
(51) Int. Cl.: C08J 9/00, C08J 9/28, C08J 9/35

(54) **Gebäudebauelement umfassend nanoporöse Polymerschaumstoffe**

(71) Anmelder: STO AG, 79780 Stühlingen (DE)
(72) Erfinder: Weier, Andreas, 84508 Burgkirchen an der Alz (DE); Hitzler, Martin, 83342 Tacherting (DE)
(74) Vertreter: Gottschalk, Matthias

(57) **Zusammenfassung**

Beschrieben werden Gebäudebauelemente umfassend mindestens einen nanoporösen Polymerschaumstoff (NP1), erhältlich durch Umsetzung von mindestens einem Epoxidharz mit mindestens einem amphiphilen Epoxidharzhärter in Wasser im Sinne einer Phaseninversionspolymerisation, mit der Maßgabe, dass der Bindemittelgehalt der Polymerschaumstoffe im Bereich von 15 bis 39,9 Gew.-% liegt. Diese Gebäudebauelemente können zur Wärmedämmung von Gebäuden oder Gebäudeteilen verwendet werden.

## Beschreibung

### Gebiet der Erfindung

Die Erfindung betrifft Gebäudebauelemente umfassend nanoporöse Polymerschaumstoffe sowie deren Verwendung zur Wärmedämmung von Gebäuden oder Gebäudeteilen.

### Stand der Technik

Polymere Epoxidharze sind seit langem bekannt. Sie werden in aller Regel durch Umsetzung von Polyepoxiden mit im Mittel mindestens zwei terminalen oder lateralen Epoxidgruppen pro Molekül mit Härtern, insbesondere aminischen Härtern, bei denen es sich um Di- oder Polyamine handelt, hergestellt. Diese polymeren Epoxidharze haben vielfältige Anwendungsgebiete, wobei die Verwendung als Lacke und Beschichtungsmassen (Aufbringung einer Deckschicht auf ein Substrat), dominieren.

EP-A-1,518,875 beschreibt spezielle Härter für wasserbasierte Epoxidharzsysteme, wobei diese Härter erhältlich sind, indem man eine Mischung von (a) mindestens einem epoxidierten Polyalkylenoxid, ausgewählt aus der Gruppe der epoxidierten Polyethylenoxide, der epoxidierten Polypropylenoxide und der Polyethylenpropylenoxide, (b) mindestens einer epoxidierten aromatischen Hydroxyverbindung ausgewählt aus der Gruppe der Bisphenol-A-Epoxide und der Bisphenol-F-Epoxide und (c) mindestens einer aromatischen Hydroxyverbindung, ausgewählt aus der Gruppe Bisphenol-A und Bisphenol-F zu einem Zwischenprodukt umsetzt und dieses Zwischenprodukt anschließend mit einem Polyamin umsetzt. Offenbart ist auch die Verwendung dieser Härter zur Herstellung von Klarlacken und Beschichtungsmassen (Aufbringung einer Deckschicht auf ein Substrat, zum Beispiel für Fußbodenbeschichtungen).

### Beschreibung der Erfindung

Aufgabe der vorliegenden Erfindung war es, ein Gebäudebauelement umfassend mindestens einen nanoporösen Polymerschaumstoff bereitzustellen. Insbesondere sollten die nanoporösen Polymerschaumstoffe eine geringe Wärmeleitfähigkeit (vorzugsweise unterhalb von 0,06 W/m·K) und hohe mechanische Festigkeit (maximale Druckspannung vorzugsweise oberhalb von 0,3 MPa) aufweisen.

Die Aufgabe wird erfindungsgemäß durch ein Gebäudebauelement nach dem unabhängigen Anspruch 1 gelöst. Bevorzugte Ausführungsformen sind in den abhängigen Ansprüchen 2 bis 8 beschrieben. Die Verwendung des erfindungsmäßen Gebäudebauelements sowie des Verbund-Materials sind in den unabhängigen Ansprüchen 9 und 10 beschrieben. Des Weiteren wird Wärmedämmverbundsystem umfassen das erfindungsgemäße Gebäudebauelement gemäß Anspruch 11 beschrieben.

Gegenstand der vorliegenden Erfindung ist ein Gebäudebauelement umfassend mindestens einen nanoporösen Polymerschaumstoff (NP1), erhältlich durch Umsetzung von ein oder mehreren Epoxidharzen (E) mit einem oder mehreren amphiphilen Epoxidharzhärtern (H) in Wasser im Sinne einer bzw. durch Phaseninversionspolymerisation (PIP), mit der Maßgabe, dass der Bindemittelgehalt der Polymerschaumstoffe im Bereich von 15 bis 39,9 Gew.-% liegt.

Vorzugsweise liegt der Bindemittelgehalt der Polymerschaumstoffe im Bereich von 15 bis 35 Gew.-% und insbesondere von 20 bis 30 Gew.-%.

Ein weiterer Erfindungsgegenstand ist die Verwendung des erfindungsgemäßen porösen Polymerschaumstoffs zur Wärmedämmung von Gebäuden und/oder Gebäudeteilen.

Ein weiterer Erfindungsgegenstand ist die Verwendung des erfindungsgemäßen Verbundwerkstoffs zur Herstellung von Gebäudebauelementen. Unter einem "Gebäudebauelement" im Sinne der vorliegenden Erfindung wird ein konstruktiver Bestandteil eines Gebäudes oder Gebäudeteils verstanden. Ein Gebäudebauelement kann beispielsweise ein Wand-, Dach-, Decken- oder Fassadenelement sein, und zwar sowohl im Innenbereich, als auch im Außenbereich.

Unter nanoporösen Polymerschaumstoffen sind Polymere zu verstehen, die innere Hohlräume aufweisen. Dabei handelt es sich um schwammartige Strukturen, die sowohl Makro- als auch Mikroporen aufweisen, wobei die Mikroporen dominieren und wobei die Mikroporen mittlere Querschnitte im Bereich von 10 bis 500 nm und insbesondere von 10 bis 100 nm aufweisen.

Unter "Bindemittelgehalt" der nanoporösen Polymerschaumstoffe ist der Gehalt der nanoporösen Polymerschaumstoffe an Bindemittel zu verstehen. Dabei wird unter Bindemittel im Rahmen der vorliegenden Anmeldung das Umsetzungsprodukt von Härter (H) und Epoxidharz (E) verstanden. Der Bindemittelgehalt ist dementsprechend der prozentuelle Anteil des so definierten Bindemittels am Gesamtsystem Polymerschaumstoff.

Die erfindungsgemäß einzusetzenden nanoporösen Polymerschaumstoffe (NP1) zeichnen sich durch eine geringe Wärmeleitfähigkeit bei hoher mechanischer Festigkeit aus. Dies macht die Materialien in Hinblick auf die Verwendung als konstruktiven, mechanisch belastbaren Wärmedämm-Materialien besonders attraktiv.

### Zu den Epoxidharzen (E)

Epoxidverbindungen (E) umfassen Polyepoxide mit im Mittel mindestens zwei terminalen oder lateralen Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche.

Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren).

Die Epoxidäquivalentgewichte dieser Epoxidverbindungen liegen vorzugsweise zwischen 85 und 3200, insbesondere zwischen 170 und 830. Das Epoxidäquivalentgewicht einer Substanz ist dabei als diejenige Menge der Substanz (in Gramm) definiert, welche 1 mol Oxiranringe enthält.

Als mehrwertige Phenole eigenen sich vorzugsweise folgende Verbindungen: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxydiphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

Auch die Polyglycidylether von mehrwertigen Alkoholen sind als Verbindungen (E) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin, Isosorbid und Bis-(4-hydroxycyclohexyl)-2,2-propan genannt.

Es können auch Polyglycidylether von Polycarbonsäuren als Verbindungen (F) verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Es können auch Mischungen von mehreren Epoxidverbindungen (E) verwendet werden.

Bei der Herstellung von nanoporösen Polymerschaumstoffen (NP1), bei der man wie oben gesagt die erfindungsgemäßen Härter (H) in wässrigem Milieu mit Epoxidverbindungen (E) im Sinne einer Phaseninversionspolymerisation (PIP) umsetzt, können optional zusätzliche dem Fachmann einschlägig bekannte Zusatzstoffe und/oder Verarbeitungshilfsmittel eingesetzt werden. Beispiele hierfür sind Pigmente, Zement, Kies, Entlüfter, Entschäumer, Dispergierhilfsmittel, Antiabsetzmittel, Beschleuniger, freie Amine, Verlaufsadditive, Leitfähigkeitsverbesserer.

### Zu den Epoxidharzhärtern (H)

Unter amphiphilen Epoxidharzhärtern (H) sind solche Epoxidharzhärter zu verstehen, die hydrophile und hydrophobe Strukturelemente aufweisen.

Vorzugsweise setzt man solche amphiphilen Epoxidharzhärter ein, die in Wasser bei 25 °C selbstemulgierend sind und die außerdem in der Lage sind, Epoxidharze (E) in Wasser bei 25 °C zu emulgieren.

Vorzugsweise setzt man solche Härter (H) ein, die erhältlich sind, indem man eine Mischung umfassend die Verbindungen (A), (B) und (C) zu einem Zwischenprodukt umsetzt und dieses Zwischenprodukt anschließend mit einem Polyamin (P) umsetzt, wobei die Verbindung (A) mindestens ein epoxidiertes Polyalkylenoxid ist, ausgewählt aus der Gruppe umfassend epoxidierte Polyethylenoxide, epoxidierte Polypropylenoxide und Polyethylenpropylenoxide, Verbindung (B) mindestens eine epoxidierte aromatischen Hydroxyverbindung ist, ausgewählt aus der Gruppe umfassend Bisphenol-A-Epoxide und Bisphenol-F-Epoxide, und Verbindung (C) mindestens eine aromatischen Hydroxyverbindung ist, ausgewählt aus der Gruppe umfassend Bisphenol-A und Bisphenol-F.

In einer Ausführungsform werden ausschließlich die Komponenten (A), (B) und (C) zu dem Zwischenprodukt umgesetzt und dieses weiter mit einem Polyamin (P) umgesetzt.

In einer weiteren Ausführungsform werden zur Herstellung des Zwischenproduktes, das anschließend mit den Polyaminen (P) zum Härter umgesetzt wird, neben den Verbindungen (A), (B) und (C) zusätzlich die Verbindungen (D) eingesetzt. Bei den Verbindungen (D) handelt es sich um Verbindungen aus der Gruppe der Triglycidylether von Triolen und der Diglycidylether von Diolen. Als Beispiele geeigneter Diole und Triole, die den Verbindungen (D) zu Grunde liegen, seien genannt: Ethylenglykol, Diethylenglykol, Triethylenglykol, 1,2-Propylenglykol, 1,3-Propylenglykol, 1,4-Butylenglykol, 1,5-Pentandiol, 1,6-Hexandiol, Cyclohexandiol, Cyclohexandimethanol, Neopentylglykol, 1,2,6-Hexantriol, Glycerin und Trimethylolpropan.

### Zu den Verbindungen (A)

Unter epoxidierten Polyethylenoxiden werden im Rahmen der Erfindung Verbindungen verstanden, die erhältlich sind, indem man die beiden terminalen OH-Gruppen von Polyethylenoxid in Oxirangruppen überführt, beispielsweise durch Umsetzung mit Epichlorhydrin. Das eingesetzte Polyethylenoxid kann dabei ein mittleres Molgewicht im Bereich von 80 bis 3000 aufweisen; es kann hergestellt werden, indem die Polymerisation des Ethylenoxids auf einem Alkylendiol mit C2-C18 in der dem Fachmann bekannten Weise gestartet wird.

Unter epoxidierten Polypropylenoxiden werden im Rahmen der Erfindung Verbindungen verstanden, die erhältlich sind, indem man die beiden terminalen OH-Gruppen von Polypropylenoxid in Oxirangruppen überführt, beispielsweise durch Umsetzung mit Epichlorhydrin. Das eingesetzte Polypropylenoxid kann dabei ein mittleres Molgewicht im Bereich von 110 bis 3000 aufweisen; es kann hergestellt werden, indem die Polymerisation des Propylenoxids auf einem Alkylendiol mit C2-C18 in der dem Fachmann bekannten Weise gestartet wird.

Unter Polyethylenpropylenoxiden werden im Rahmen der Erfindung Verbindungen verstanden, die erhältlich sind, indem man die beiden terminalen OH-Gruppen von Polyethylenpropylenoxid in Oxirangruppen überführt, beispielsweise durch Umsetzung mit Epichlorhydrin. Das eingesetzte Polyethylenpropylenoxid kann dabei ein mittleres Molgewicht im Bereich von 80 bis 3000 aufweisen. Unter Polyethylenpropylenoxid werden Verbindungen verstanden, die durch Copolymerisation von Ethylen- und Propylenoxid erhältlich sind, wobei die Polymerisation der beiden Reaktanden gleichzeitig oder blockweise durchgeführt werden kann, indem die Polymerisation des Propylenoxids und/oder des Ethylenoxids auf einem Alkylendiol mit C2-C18 in der dem Fachmann bekannten Weise gestartet wird.

Die Verbindungen (A) können einzeln oder im Gemisch miteinander eingesetzt werden.

### Zu den Verbindungen (B)

Unter Bisphenol-A-Epoxiden werden im Rahmen der Erfindung wie allgemein üblich Verbindungen verstanden, die erhältlich sind, indem man Bisphenol-A mit Epichlorhydrin umsetzt und/oder dieses durch Weitereaktion mit Bisphenol A polymerisiert. Diese Verbindungen sind daher auch unter der Bezeichnung Bisphenol-A-diglycidylether oder allgemein als Epoxidharze bekannt. Handelsübliche Produkte sind Epikote 828, 1001, 1002, 1003, 1004 u.a. der Firma Hexion (ehemals Shell).

Die Molekulargewichte der eingesetzten Bisphenol-A-epoxide liegen vorzugsweise im Bereich von 380 bis 3000

Unter Bisphenol-F-Epoxiden werden im Rahmen der Erfindung wie allgemein üblich Verbindungen verstanden, die erhältlich sind, indem man Bisphenol-F mit Epichlorhydrin umsetzt und/oder durch weitere Umsetzung mit Bisphenol F polymerisiert . Diese Verbindungen sind daher auch unter der Bezeichnung Bisphenol-F-Diglycidylether oder allgemein als Bisphenol F Epoxidharze bekannt.

Die Molekulargewichte der eingesetzten Bisphenol-F-epoxide liegen vorzugsweise im Bereich von 350 bis 3000.

Die Verbindungen (B) können einzeln oder im Gemisch miteinander eingesetzt werden.

### Zu den Verbindungen (C)

Bisphenol-A ist dem Fachmann einschlägig bekannt und wird durch folgende Formel charakterisiert:

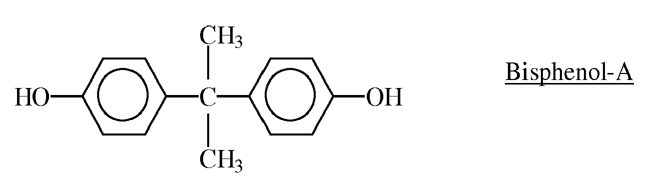

Bisphenol-F ist dem Fachmann ebenfalls einschlägig bekannt.

Die Verbindungen (C) können einzeln oder im Gemisch miteinander eingesetzt werden.

### Zu den Verbindungen (P)

Als Polyamine (P) kommen im Rahmen der vorliegenden Erfindung primäre und/oder sekundäre Amine mit mindestens zwei Stickstoffatomen und mindestens zwei aktiven Amino-Wasserstoffatomen pro Molekül zum Einsatz. Es können aliphatische, aromatische, aliphatisch-aromatische, cycloaliphatische und heterocyclische Di- und Polyamine benutzt werden. Beispiele für geeignete Polyamine (P) sind: Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, Aminoethylpiperazine, die Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclohexylmethan, 1,3-Bis(aminomethyl)cyclohexan, die Mischung der über eine Methylenbrücke verknüpften Poly(cyclohexyl-aromischen)amine (auch als MBPCAA bekannt) und Polyaminoamide. Polyethylenamine, insbesondere Diethylentriamin sind besonders bevorzugt.

Die Verbindungen (P) können einzeln oder im Gemisch miteinander eingesetzt werden.

### Zur Herstellung des Zwischenproduktes

In einer Ausführungsform setzt man bei der Herstellung des Zwischenproduktes die Verbindungen (A) und (B) in einem molaren Verhältnis von 0,1:1 bis 5:1 ein.

In einer Ausführungsform stellt man bei der Herstellung des Zwischenproduktes ein molares Verhältnis der Summe der Verbindungen (A) und (B) (diese Verbindungen enthalten jeweils zwei Oxirangruppen pro Molekül) zu Verbindung C (diese Verbindung enthält zwei OH-Gruppen pro Molekül) im Bereich von 1,1:1 bis 10:1 ein. Dies ist gleichbedeutend damit, dass man das Äquivalentverhältnis von Oxiranringen in der Summe der Verbindungen (A) und (B) zu reaktiven Wasserstoffatomen der Verbindung (C) auf einen Wert im Bereich von 1,1:1 bis 10:1 einstellt.

In einer weiteren Ausführungsform, nämlich in Fällen, wo im Zuge der Herstellung des Härters auch mindestens eine Verbindung (D) eingesetzt wird, stellt man bei der Herstellung des Zwischenproduktes ein molares Verhältnis der Summe der Verbindungen (A), (B) und (D) (diese Verbindungen enthalten jeweils zwei Oxirangruppen pro Molekül) zu Verbindung C (diese Verbindung enthält zwei OH-Gruppen pro Molekül) im Bereich von 1,1:1,0 bis 10,0:1,0 ein. Dies ist gleichbedeutend damit, dass man das Äquivalentverhältnis von Oxiranringen in der Summe der Verbindungen (A), (B) und (D) zu reaktiven Wasserstoffatomen der Verbindung (C) auf einen Wert im Bereich von 1,1:1,0 bis 10,0:1,0 einstellt.

Hierzu der Eindeutigkeit halber folgende Erläuterung: Der Ausdruck "Äquivalentverhältnis" ist dem Fachmann geläufig. Der grundlegende Gedanke hinter dem Begriff des Äquivalents ist der, dass man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, dass unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, dass zwar OH-Gruppen oder NH-Gruppen solche reaktiven Gruppen darstellen, nicht aber NH₂-Gruppen, bei denen zwei reaktive H-Atome am selben Stickstoffatom sitzen. Hier werden sinnvollerweise innerhalb der funktionellen Gruppe NH₂ die beiden Wasserstoffatome als reaktive Gruppe betrachtet, so dass die funktionelle Gruppe NH₂ zwei reaktive Gruppen, nämlich die Wasserstoffatome, aufweist.

In einer Ausführungsform führt man die Herstellung des Zwischenproduktes in Gegenwart eines Katalysators durch, insbesondere Triphenylphosphin oder Ethyltriphenylphosphoniumiodid. Dabei beträgt die Menge des Katalysators etwa 0,01 bis 1,0 Gew.-% - bezogen auf die Gesamtmenge der Verbindungen (A), (B) und (C).

Die Epoxidzahl (%EpO) des Zwischenproduktes liegt vorzugsweise unterhalb von 10% EpO, insbesonder unterhalb von < 5% EpO. Die Definition der Epoxidzahl und die Einzelheiten der analytischen Bestimmung können dem Beispielteil dieser Anmeldung entnommen werden.

### Zur Herstellung des Härters (H)

Zur Herstellung des Härters wird wie schon gesagt das Zwischenprodukt mit einem Polyamin (P) umgesetzt.

In einer Ausführungsform setzt man das Zwischenprodukt und das Polyamin (P) in solchen Mengen ein, daß das Äquivalentverhältnis der reaktiven H-Atome an den Aminostickstoffatomen von (P) zu den Oxirangruppen in der Zwischenverbindung im Bereich von 4:1 bis 100:1 liegt.

Die Umsetzung des Zwischenproduktes mit dem Polyamin wird vorzugsweise so durchgeführt, dass das Polyamin im Überschuss vorgelegt wird, so dass sichergestellt ist, dass im wesentlichen 1 Molekül des Polyamins, vorzugsweise Diethylentriamin, mit jeweils einer der Epoxidgruppen der Zwischenverbindung reagiert. Überschüssiges Amin kann abdestilliert werden um den Gehalt an freiem Amin möglichst niedrig zu halten.

### Zur Phaseninversionspolymerisation (PIP)

Die Polymerschaumstoffe werden bevorzugt mittels PIP hergestellt. Unter Phaseninversionspolymerisation (PIP) ist folgendes zu verstehen: Man stellt zunächst eine wäßrige Emulsion des Epoxidharzes (E) in Wasser her, wobei der amphiphile Epoxidharzhärter (H) als Emulgator fungiert. Dieses System ― nachfolgend auch als Reaktionssystem bezeichnet - ist zunächst als Öl-in-Wasser-Emulsion (O/W-Emulsion) anzusprechen. Bei der Öl-Komponente dieser O/W-Emulsion handelt es sich um das Epoxidharz.

Während der nun folgenden Umsetzung von Harz und Härter (Aushärtung im Sinne einer Polyaddition) kommt es zu einer Phaseninversion, d.h. das Reaktionssystem verändert sich von einer Emulsion des Typs O/W zu einer solchen des Typs W/O, in der Wasser als innere Phase von dem aushärtenden Polymer umschlossen wird. Dies liegt daran, dass sich im Zuge der Aushärtung die ursprünglichen Emulgatoreigenschaften des Härters verändern, da dessen Natur sich durch Polyaddition in Richtung zunehmender Hydrophobie wandelt.

Nach vollständiger Aushärtung liegt nun eine poröse Polymermatrix vor, die in den Kavitäten der organischen Matrix die Wasserphase enthält. Die Wasserphase lässt sich gewünschtenfalls durch Trocknung entfernen, wobei luftgefüllte Kavitäten entstehen. Notwendige Bedingung dafür, dass eine Phaseninversionspolymerisation stattfindet ist, dass kein Wasser aus dem Reaktionssystem entweichen kann. Dies kann in verschiedener Weise technisch realisiert werden.

Zum einen kann das Reaktionssystem in eine abgeschlossene Form gegeben werden. Es ist auch möglich, das Reaktionssystem in ein offenes System zu geben und dann beispielsweise dafür zu sorgen, dass (a) an der Grenzfläche zur Gasphase (meist umgebende Luft) eine ausreichende Luftfeuchtigkeit herrscht, die eine Austrocknung bzw. einen Wasserverlust der oberen Schicht des Reaktionssystems verhindert oder dass (b) die Grenzfläche zur Gasphase abgedeckt wird, beispielsweise durch eine Folie.

Während es sich bei den bisher beschriebenen Varianten der Durchführung der PIP sozusagen um verlustfreie Ausführungsformen handelt, besteht eine weitere Variante der PIP-Durchführung darin, das Reaktionssystem zwar in ein offenes System zu geben, jedoch keine besonderen Vorkehrungen zu treffen, um einen Wasserverlust der Grenzschicht zur Gasphase zu verhindern. In diesem Falle bildet sich in dieser Grenzschicht durch Wasserverlust eine dichte, chemikalienresistente Struktur (die als Klarlack angesprochen werden kann), die eine Wasser-Barriere für den darunter befindlichen Teil des Reaktionssystems bildet, so dass in dieser ungehindert die PIP stattfinden kann. Nach vollständiger Härtung des Reaktionssystems kann man dann die dichte, chemikalienresistente Schicht (die in der Regel 0,1 bis 0,3 mm dick ist), durch mechanisches Abtragen beseitigen.

Dass es sich bei den ausgehärteten Systemen um nanoporöse Strukturen handelt ist bereits optisch daran zu erkennen, dass die erhaltenen Materialien nicht klar sind, sondern weiß.

In einer bevorzugten Ausführungsform wird die PIP so durchgeführt, dass Epoxidharz (E) und Härter (H) in einem Äquivalentverhältnis von 2 : 1 bis 1 : 2 eingesetzt werden. Dabei sind (E) zu (H) Äquivalentverhältnisse von 1 : 1 besonders bevorzugt.

Die PIP ist gekennzeichnet durch eine einleitende Phase, bei der eine O/W-Emulsion vorliegt und eine Aushärtephase, deren beginn mit der Bildung der W/O-Emulsion anzusetzen ist. Die PIP kann bei 0 bis 100% Luftfeuchte durchgeführt werden. Der Wassergehalt des PIP-Reaktionssystems kann im Bereich von 95 bis 20 Gew.-% (bezogen auf das gesamte Reaktionssystem) variiert werden.

Gewünschtenfalls können dem Reaktionssystem auch Verdicker zugesetzt werden.

Die Aushärtung des Reaktionssytems kann in einem breiten Temperaturbereich durchgeführt werden, vorzugsweise zwischen 1°C und 99°C und insbesondere zwischen 5 °C und 60 °C.

In einer bevorzugten Ausführungsform dosiert man bei der Herstellung des erfindungsgemäß einzusetzenden nanoporösen Polymerschaumstoffes (NP1) während der Phaseninversionspolymerisation einen pulverförmigen nanoporösen Polymerschaumstoff (NP2) zu, wobei der pulverförmige nanoporöse Polymerschaumstoff (NP2) erhältlich ist durch Umsetzung von ein oder mehreren Epoxidharzen (E) mit einem amphiphilen Epoxidharzhärter (H) in Wasser im Sinne einer Phaseninversionspolymerisation nebst anschließender Überführung in die Pulverform. Anschaulich bedeutet diese Ausführungsform, dass man zunächst einen pulverförmigen nanoporösen Polymerschaumstoff (NP2) herstellt, der dann im Zuge der Herstellung nanoporösen Polymerschaumstoffes (NP1) während der Phaseninversionspolymerisation in Pulverform, gegebenenfalls mit Wasser befeuchtet, zudosiert mit, wobei im resultierenden Polymerschaumstoff gewissermaßen "NP2-Inseln" in eine "NP1-Matrix" eingebettet vorliegen. Vorzugsweise ist der Bindemittelgehalt der "NP1-Inseln" dabei geringer als derjenige der "NP2-Matrix"; der Vorteil dieser speziellen Konfiguration liegt darin, dass man auf diese Weise zu einem Verbund-Werkstoff gelangt, der als organischer Nanoschaum in einem organischen Nanoschaum bezeichnet werden kann und der es gestattet, eine anwendungstechnisch optimale Kombination der Kerneigenschaften Wärmeleitfähigkeit und mechanische Festigkeit einzustellen.

Ein weiterer Erfindungsaspekt ist ein Gebäudebauelement umfassend mindestens einen nanoporösen Polymerschaumstoff (NP1), erhältlich durch Umsetzung von ein oder mehreren Epoxidharzen mit einem amphiphilen Epoxidharzhärter in Wasser im Sinne einer Phaseninversionspolymerisation, wobei man bei der Herstellung des nanoporösen Polymerschaumstoffes während der Phaseninversionspolymerisation einen pulverförmigen nanoporösen Polymerschaumstoff (NP2) zudosiert, wobei der pulverförmige nanoporöse Polymerschaumstoff (NP2) erhältlich ist durch Umsetzung von ein oder mehreren Epoxidharzen mit einem amphiphilen Epoxidharzhärter in Wasser im Sinne einer Phaseninversionspolymerisation nebst anschließender Überführung in die Pulverform, mit der Maßgabe, dass der Bindemittelgehalt des Polymerschaumstoffes im Bereich von 15 bis 39,9 Gew.-% liegt.

Die erfindungsgemäßen Gebäudebauteile umfassend nanoporöse Polymerschaumstoffe (NP1) enthalten in einer Ausführungsform Substanzen, die die Brandschutz-Eigenschaften verbessern. Dies kann dadurch realisiert werden, dass weitere Substanzen in die nanoporösen Polymerschaumstoffe integriert sind, was sich in besonders einfacher Weise im Zuge der Phaseninversionspolymerisation bewerkstelligen lässt. Ein Beispiel für solche geeigneten Brandschutz-Zusätze ist das Brandschutzmittel VP 5453/4 der Firma Cognis.

In einer Ausführungsform sind in die nanoporösen Polymerschaumstoffe (NP1) ein oder mehrere Additive aus der Gruppe der Brandschutzadditive, Hydrophobierungsmittel und Biozide integriert.

### Beispiele

### Abkürzungen

Im Folgenden bedeuten:
● EEW = Epoxidäquivalentgewicht (wie oben beschrieben).
● MW = mittleres Molekulargewicht
● UPM = Umdrehungen pro Minute
● % = Gewichtsprozent, sofern nicht explizit anders angegeben

### Verwendete Rohstoffe

Epoxidharz (E): Chem Res E20 (Cognis GmbH)

Härter (H): es wurde folgender Härter H1 hergestellt:

### Härter H1

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3,5 Stunden gerührt, bis die Epoxidzahl 3,95% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.

Der Überschuss an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.

Es wurden 205,6g einer klaren bernsteinfarbigen Flüssigkeit erhalten mit einer Viskosität (in Substanz, Brookfield, 10Upm, 40°C) von 2140 mPas, einem Feststoffgehalt von 60% und einer Aminzahl von 134.

### Anwendungsbeispiele 1 bis 3

Epoxidharze (E) und Härter (H) wurden in einem Rührbecher (Durchmesser 95mm, Höhe 120mm) vorgelegt und mit einem Pendraulikrührer Typ LM34 bei Stufe 1 (ca. 465 Umdrehungen/Minute) voremulgiert. Die eingesetzten Mengen an (E) und (H) sind Tabelle 1 zu entnehmen. Eine homogene Weißfärbung zeigte eine entsprechende Homogenisierung an. Anschließend erfolgte portionsweise die Wasserzugabe (die jeweilige Wassermenge ist Tabelle 1 zu entnehmen). Die Rührgeschwindigkeit wurde so angepasst, dass sich gerade kein Thrombus mehr bildete. Die Gesamtzeit vom Voremulgieren bis zur Verarbeitung betrug ca. 7 Minuten. Alle Versuche wurden mit einem Äquivalentverhältnis Epoxidharz zu Härter von 1 : 1 durchgeführt.

Zur Herstellung der Kombimaterialen aus NP2 in NP1 wurde zunächst ein Material mit dem geringeren Bindemittelgehalt angesetzt und in einer Teflonform abgedeckt unter Vermeidung von Wasserverdunstung ausgehärtet. Die Aushärtungszeit betrug 24 h bei 55°C. Die Trocknung war nach 48h bei 55°C abgeschlossen. Das Material wurde zerkleinert und mit Wasser wie in Beispiel 2 angegeben angefeuchtet und anschließend in eine Emulsion mit höherem Bindemittelgehalt vorsichtig eingerührt. Die so vorbereitete Emulsion wurde in eine Teflonform gegossen und wie in Beispiel 2 angegeben ausgehärtet.

Einzelheiten zu den Beispielen 1 bis 3 können der Tabelle 1 entnommen werden. Die Beispiele 1 und zwei sind erfindungsgemäß.

Beispiel 3 dient dem Vergleich.

### Probenvorbereitung

Zur Herstellung der Prüfkörper für Druckfestigkeitsmessungen wurden entsprechende Silikonformen, beschichtet mit dem Trennmittel T3 (Firma Ebalta), verwendet. Die Platten für die Wärmeleitfähigkeitsmessung wurden in einer Teflonform, beschichtet mit dem Trennmittel Loxiol G40 (Fa. Cognis), hergestellt. Die Gussmassen wurden bis zur Entformung abgedeckt, jedoch nicht Luftdicht verschlossen. Die Prüfkörper wurden nach 48h entformt, die Trocknung benötigte bei 55°C ca. 48h.

### Wärmeleitfähigkeitsmessung

Die Wärmeleitfähigkeit wurde nach ISO 8301 gemessen, dies entspricht der Wärmefluss-Messmethode. Die Plattenmaße betrugen 150mm x 150mm, die Schichtdicke variierte zwischen 20mm und 25mm. Zur Messung wurde eine Messapparatur der Firma NETZSCH Typ HFM 436/3/1E verwendet, der Anpressdruck lag bei 65N. Als Messtemperatur wurde 10°C mit einer Temperaturdifferenz von 20K gewählt. Dies ist eine Standardmessung für Wärmedämmstoffe. Die Platten wurden 7 Tage bei Raumtemperatur getrocknet und anschließend bei 55°C bis zur Massenkonstanz nachgetrocknet. Die Proben wurden vor der Messung mindestens 72h bei Raumtemperatur gelagert, eine spezielle Lagerung bei Normklima fand nicht statt.

### Bestimmung von Druckfestigkeiten

Die Messung der Druckfestigkeiten wurde in Anlehnung an DIN 53452 bzw. 53454 durchgeführt. Eine Lagerung bei Normklima fand nicht statt. Die Geometrieänderung der Probenkörper konnte nicht genau vorhergesagt werden und wurde deshalb nicht berücksichtigt. Als Messinstrument wurde eine Universalprüfmaschine von Instron, Typ 5565 mit der Software Bluehill 2.0, eingesetzt. Die Maße der Prüfkörper für die Druckversuche wurden zylindrische Prüfkörper der Maße 27mm Höhe und 12mm Durchmesser eingesetzt. Die Prüfgeschwindigkeiten sind den DIN zu entnehmen. Die Aushärtung erfolgte bei 55°C.

**Tabelle 1 ― Beispiele:**

| | Beispiel 1 | Beispiel 2 | Vergleichs-Beispiel 3 |
|---|---|---|---|
| Härter H1 [g] | 88,0 | 190,0 | 255,0 |
| Chem Res E20 [g] | 79,8 | 172,4 | 231,2 |
| Nanoschaum, 15%FK aus Beispiel 1 | - | 85,9 | - |
| Wasser, v.e. [g] | - | 391,2 | - |
| Wasser, v.e. + 1% Bentone EW [g] | 716,1 | 592,0 | 794,5 |
| Bindemittelgehalt [%] | 15,0 | 26,0 | 30,0 |
| Trocknungstemperatur | 55°C | 55°C | 55°C |
| Dichte [g/cm³] . | 0,18 | 0,26 | 0,33 |
| Wärmeleitfähigkeit [W/m.K] | 0,037 | 0,044 | 0,052 |
| Max. Druckspannung Mittelwert [MPa] | 0,32 | n.b. | 1,6 |

| | | | |
|---|---|---|---|
| Hinweise: (1) Die Zeile "Bindemittelgehalt" dient lediglich der Information. Unter Bindemittel ist hier einfach das Umsetzungsprodukt von Härter H1 und Epoxidharz (Chem Res E20) zu verstehen. Der Bindemittelgehalt ist dementsprechend der prozentuelle Anteil des so definierten Bindemittels am Gesamtsystem. Exemplarisch sei die Berechnung des Bindemittelgehalts für Beispiel 1 demonstriert: Da die Reaktion von Epoxidharz mit Aminhärter (Härter H1) als Polyaddition ohne Abspaltung von Molekülteilen erfolgt, sind die Massenanteile von Harz und Härter zu addieren, um die Menge des resultierenden Bindemittels zu erhalten: Das eingesetzte Epoxidharz Chemres E 20 ist zu 100% zu berücksichtigen (79,8g). Vom eingesetzten Härter H1 sind, da er einen Feststoffgehalt von 60% aufweist, lediglich 0,6 x 88,0g = 52,8g zu berücksichtigen. Daraus ergibt sich die Menge des Bindemittels im System zu 52,8g + 79,8g = 132,6g. Das Gesamtsystem enthält zusätzlich 716,19 g Wasser, umfasst mithin eine Gesamtmenge von 88,0g+79,8g+716,1g = 883,9g. Der Bindemittelanteil im Gesamtsystem ergibt sich daraus wie folgt: % Bindemittel = 132,6 x 100 / 883,9 = 15,00%. (2) n.b. bedeutet "nicht bestimmt" (3) v.e. bedeutet "vollentsalzt" | | | |

## Patentansprüche

1. Gebäudebauelement umfassend mindestens einen nanoporösen Polymerschaumstoff (NP1), erhältlich durch Umsetzung von mindestens einem Epoxidharz (E) mit mindestens einem amphiphilen Epoxidharzhärter (H) in Wasser im Sinne einer Phaseninversionspolymerisation, mit der Maßgabe, dass der Bindemittelgehalt der Polymerschaumstoffe im Bereich von 15 bis 39,9 Gew.-% liegt.

2. Gebäudebauelement nach Anspruch 1, wobei man solche Epoxidharzhärter (H) einsetzt, die erhältlich sind, indem man eine Mischung umfassend die Verbindungen (A), (B) und (C) zu einem Zwischenprodukt umsetzt und dieses Zwischenprodukt anschließend mit einem Polyamin (P) umsetzt, wobei
Verbindung (A) mindestens ein epoxidiertes Polyalkylenoxid ist, ausgewählt aus der Gruppe umfassend epoxidierten Polyethylenoxide, epoxidierte Polypropylenoxide und Polyethylenpropylenoxide,
Verbindung (B) mindestens eine epoxidierte aromatische Hydroxyverbindung ist, ausgewählt aus der Gruppe umfassend Bisphenol-A-Epoxide und Bisphenol-F-Epoxide, und
Verbindung (C) mindestens eine aromatische Hydroxyverbindung ist, ausgewählt aus der Gruppe umfassend Bisphenol-A und Bisphenol-F.

3. Gebäudebauelement nach Anspruch 2, wobei das Polyamin (P) Diethylentriamin ist.

4. Verwendung Anspruch 2 oder 3, wobei die Verbindung (A) ausgewählt ist aus epoxidierten Polypropylenoxide und/oder Verbindung (B) ausgewählt ist aus Bisphenol-A-Epoxiden und/oder Verbindung (C) Bisphenol-A ist.

5. Gebäudebauelement nach einem der Ansprüche 1 bis 4, wobei bei der Herstellung des nanoporösen Polymerschaumstoffes (NP1) während der Phaseninversionspolymerisation ein pulverförmiger nanoporöser Polymerschaumstoff (NP2) zudosiert wird, wobei der pulverförmige nanoporöse Polymerschaumstoff (NP2) erhältlich ist durch Umsetzung von mindestens einem Epoxidharz (E) mit mindestens einem amphiphilen Epoxidharzhärter (H) in Wasser im Sinne einer Phaseninversionspolymerisation sowie anschließender Überführung in die Pulverform.

6. Gebäudebauelement nach einem der Ansprüche 1 bis 5, wobei zusätzlich mindestens ein Additiv ausgewählt aus der Gruppe umfassend Brandschutzadditive, Hydrophobierungsmittel und Biozide in den mindestens einen nanoporösen Polymerschaumstoff integriert sind.

7. Gebäudebauelement nach einem der Ansprüche 1 bis 6, wobei das Gebäudebauelement ein Wand-, Dach-, Decken- oder Fassadenelement für den Innen- und/oder Aussenbereich ist.

8. Gebäudebauelement nach einem der Ansprüche 1 bis 7, wobei das Gebäudebauelement als Formköper oder Dämmplatte ausgebildet ist.

9. Verwendung des Gebäudebauelements nach einem der Ansprüchen 1 bis 8 zur Wärmedämmung an Gebäuden oder Gebäudeteilen.

10. Verwendung des mindestens einen nanoporösen Polymerschaumstoffs wie in einem der Ansprüche 1 bis 6 beschrieben zur Herstellung von Gebäudebauelementen.

11. Wärmedämmverbundsystem umfassend mindestens ein Gebäudebauelement nach einem der Ansprüche 1 bis 8.
